# EUROPÄISCHE PATENTSCHRIFT

(11) **EP 3 540 246 B1**
(45) Veröffentlichungstag und Bekanntmachung des Hinweises auf die Patenterteilung: **17.07.2024**
(21) Anmeldenummer: 19161816.4
(22) Anmeldetag: 11.03.2019
(51) Int. Cl.: F16B 41/00

(54) **SYSTEM AUS EINER MANIPULATIONSSCHUTZVORRICHTUNG UND EINES VOR MANIPULATION ZU SCHÜTZENDEN GEGENSTANDS**
SYSTEM COMPRISING AN ANTI-TAMPERING DEVICE AND AN OBJECT TO BE PROTECTED AGAINST TAMPERING
SYSTÈME COMPRENANT UN DISPOSITIF DE PROTECTION CONTRE DES MANIPULATIONS ET UN OBJET À PROTÉGER CONTRE LES MANIPULATIONS

(30) Priorität: 13.03.2018 DE 202018101395 U; 04.05.2018 DE 102018110778
(43) Veröffentlichungstag der Anmeldung: 18.09.2019
(73) Patentinhaber: TE Connectivity KISSLING Products GmbH, 72218 Wildberg (DE)
(72) Erfinder: Reichert, Volker, 01705 Freital (DE); Höhn, Roland, 72348 Rosenfeld (DE)
(74) Vertreter: Grünecker Patent- und Rechtsanwälte PartG mbB

(56) Entgegenhaltungen:
- DE-U1- 29 721 694
- US-A- 3 782 146
- US-A- 4 732 517

## Beschreibung

Die Erfindung betrifft ein System aus einer Manipulationsschutzvorrichtung und einem vor Manipulation zu schützenden Gegenstands, die Manipulationsschutzvorrichtung umfassend eine
Aufnahme zur zumindest teilweisen Aufnahme eines vor Manipulation zu schützenden Gegenstands.

Es ist bekannt, um Gegenstände vor Manipulation zu schützen, diese mit einer Plombe zu versehen, die nur durch Zerstören der Plombe entfernt werden kann. Eine fehlende oder beschädigte Plombe spricht dafür, dass eine Manipulation durchgeführt wurde. In bestimmten Anwendungsfällen, wie beispielsweise in Nutzfahrzeugen, müssen bestimmte Gegenstände, wie beispielsweise ein Impulsgeber, vor Manipulation geschützt werden.

Zum einen muss verhindert werden, dass der Impulsgeber selbst manipuliert wird und zum anderen muss verhindert werden, dass der Impulsgeber in unberechtigter Weise von einem Gegenstand, mit dem er verbunden ist, entfernt wird. Auch bei Impulsgebern in Nutzfahrzeugen wird zum Verhindern von Manipulationen an dem Impulsgeber eine drahtgebundene Plombe verwendet. Dies hat jedoch fertigungstechnische Nachteile. Insbesondere ist es aufwendig, den Draht in mehrere Öffnungen einzufädeln und die Drahtenden anschließend manipulationssicher miteinander zu verbinden.

US 4,732,517 A befasst sich mit einer Manipulationsschutzvorrichtung mit eine ringförmige Kragenvorrichtung zur Verlängerung des Befestigungsmittel-Schaftes durch diese und zur Anordnung neben der Unterseite des Befestigungskopfes beim Zusammenbau mit dem Befestigungsmittel und ein Verschlusselement, das so angepasst ist, dass es mit der Kragenvorrichtung zusammenpasst, um den Befestigungskopf kooperativ zu umschließen, um den Zugang dazu zu verhindern.

DE 297 21 694 U1 betrifft ein Gerät mit einem zylindrischen Schutzgehäuse mit einer Flanschfläche.

Aufgabe der vorliegenden Erfindung ist es deshalb System aus einer Manipulationsschutzvorrichtung und einem vor Manipulation zu schützenden Gegenstand bereitzustellen, das einen sicheren Manipulationsschutz darstellt und einfach montiert werden kann.

Gelöst wird diese Aufgabe durch den Gegenstand des unabhängigen Patentanspruchs gelöst. Vorteilhafte Weiterbildungen sind Gegenstand der abhängigen Patentansprüche.

Unter einer unlösbaren Verbindung wird im Sinne der Erfindung eine Verbindung verstanden, die nur gelöst werden kann, wenn mindestens eines der Teile und/oder die Formschlussverbindung zerstört wird. Dabei ist es denkbar, dass beispielsweise unter Zuhilfenahme eines geeigneten Werkzeugs das erste und das zweite Teil voneinander gelöst werden können, indem die Formschlussverbindung gelöst wird, wenn sich in der Aufnahme kein zu schützender Gegenstand befindet. In diesem Fall könnte es möglich sein, dass über die Aufnahme die Formschlussverbindung durch ein Werkzeug zugänglich ist und die Teile voneinander gelöst werden können. Dies kann dann vorteilhaft sein, wenn die beiden Teile der Manipulationsschutzvorrichtung versehentlich miteinander verbunden werden, ohne dass sich ein zu schützender Gegenstand in der Aufnahme befindet. Wenn die beiden Teile dann voneinander lösbar sind, kann die Manipulatlonsschutzvorrichtung immer noch verwendet werden.

Wenn sich jedoch ein zu schützender Gegenstand in der Aufnahme befindet, darf die Formschlussverbindung nicht mehr zugänglich sein, sodass ein Trennen des ersten und des zweiten Teils nur unter Zerstörung der Formschlussverbindung und/oder zumindest eines der Teile möglich ist.

Die Verwendung einer Formschlussverbindung hat den Vortell, dass die beiden Teile relativ einfach, Insbesondere durch Ineinanderstecken oder Ineinanderschrauben, miteinander verbunden werden können. Es ist nicht notwendig, eine kraftschlüssige oder stoffschlüssige Verbindung herzustellen. Dies wäre mit einem erhöhten Aufwand verbunden.

Grundsätzlich denkbar und besonders vorteilhaft ist es, wenn das erste und das zweite Teil direkt mittels einer Formschlussverbindung miteinander verbunden werden, dass also sowohl das erste als auch das zweite Teil entsprechende Formschlusselemente aufweisen, die direkt miteinander zusammenwirken. Es ist jedoch auch denkbar, dass die Formschlussverbindung mittels eines Verbindungsteils, insbesondere einem Federring, hergestellt ist. Beispielsweise kann das erste Teil am Innenumfang eine Nut aufweisen und das zweite Teil am Außenumfang eine Nut aufweisen, wobei das Verbindungsteil, insbesondere der Federring, teilweise in beiden Nuten angeordnet ist und so eine axiale Relativbewegung von erstem und zweitem Tell verhindert.

Das erste und das zweite Teil sind im Wesentlichen holzylindrisch ausgebildet. Somit ist es insbesondere
möglich, einen im Wesentlichen zylindrisch ausgebildeten Gegenstand vor Manipulation zu schützen. Dabei kann der Innendurchmesser des ersten Teils größer sein als der größte Außendurchmesser oder das maximale Eckenmaß eines prismatischen Zwischenteils des zu schützenden Gegenstands. Der Außendurchmesser des zweiten Teils kann kleiner sein als der Innendurchmesser des ersten Teils.

Das zweite Teil kann zumindest abschnittsweise In dem ersten Teil angeordnet sein. Insbesondere kann das zweite Teil in das erste Teil eingesteckt oder In dieses eingeschraubt sein. Das zweite Teil kann somit durch das erste Teil geschützt angeordnet sein. Das zweite Teil kann auch nur mit einem Abschnitt im ersten Teil angeordnet sein und mit einem weiteren Abschnitt über das erste Teil, insbesondere nach unten, vorstehen. Dadurch kann der Durchmesser der Manipulationsschutzvorrichtung im Bereich des Gewindes des Impulsgebers gering gehalten werden, was die Montage vereinfacht.

Die Aufnahme der Schutzvorrichtung ist so messen, dass die Schutzvorrichtung mit Spiel an dem zu schützenden Gegenstand angeordnet ist, nämlich relativ zu dem zu schützenden Gegenstand drehbar ist. Dies hat insbesondere dann Vorteile, wenn der zu schützende
Gegenstand einen Werkzeug angriff, beispielsweise einen Sechskant, aufweist. Wenn die Schutzvorrichtung relativ zu dem zu schützenden Gegenstand, insbesondere relativ zu dem Werkzeugangriff drehbar ist, kann verhindert werden, dass der zu schützende Gegenstand gedreht wird und beispielsweise von einem Gegenstand entfernt wird, mit dem der zu schützende Gegenstand verbunden ist.

Weitere Vorteile ergeben sich, wenn das erste Teil zumindest ein Formschlusselement und das zweite Teil zumindest ein komplementäres Formschlusselement aufweisen. Somit kann auf ein zusätzliches Verbindungsteil verzichtet werden.

Dabei kann die Formschlussverbindung eine Feder-Nut-Verbindung, eine Schraubverbindung und/oder eine Schnapphakenverbindung umfassen. Grundsätzlich sind jedoch auch andere Formschlussverbindungen denkbar.

Dabei kann die Formschlussverbindung zumindest ein radial auslenkbares Federelement aufweisen, das vorzugsweise am zweiten Teil angeordnet ist. Ein radial auslenkbares Federelement kann beispielsweise verdrängt werden, während das erste und das zweite Teil miteinander verbunden werden, insbesondere das zweite Teil in das erste Teil eingesteckt oder eingeschraubt wird. Das erste Teil kann eine Aussparung oder mehrere Aussparungen aufweisen, in die das radial auslenkbare Federelement eingreifen kann, um dadurch eine Formschlussverbindung herzustellen. Die Aussparung am ersten Teil kann beispielsweise als Nut parallel zur Längsrichtung des ersten Teils ausgebildet sein oder als Hintergriff an der Innenwand des ersten Teils ausgebildet sein.

Alternativ oder zusätzlich kann eine Verdrehsicherung vorgesehen sein, die eine drehende Relativbewegung von erstem und zweitem Teil zumindest in einer Drehrichtung verhindert. Beispielsweise kann es möglich sein, das zweite Teil in das erste Teil einzuschrauben. Ein Zurückdrehen beziehungsweise Zurückschrauben wird jedoch durch die Verdrehsicherung, insbesondere ein radial auslenkbares Federelement, verhindert.

Das erste und das zweite Teil können zur Montage axial relativ zueinander bewegbar sein und in Formschlussverbindung axial nicht relativ zueinander bewegbar sein. Somit ist es möglich, das erste und das zweite Teil durch eine Relativbewegung miteinander zu verbinden, nicht jedoch durch eine entgegengesetzte Bewegung voneinander zu trennen.

Die Schutzvorrichtung kann einen Anschlag, insbesondere einen Zentrierbund, aufweisen, der eine axiale Bewegung des Schutzkörpers relativ zum zu schützenden Gegenstand begrenzt oder verhindert. Somit kann sichergestellt werden, dass die Schutzvorrichtung nicht axial von dem zu schützenden Gegenstand abgezogen werden kann.

Besondere Vorteile ergeben sich, wenn das erste und/oder das zweite Teil ein eindeutiges Identifikationsmerkmal aufweist. Als Identifikationsmerkmal kommt beispielsweise ein Barcode oder eine mehrstellige Ziffer in Frage. Somit ist jedes erste und jedes zweite Teil ein Unikat.

Weiterhin kann vorgesehen sein, dass die Schutzvorrichtung zumindest eine Aussparung für das Erkennen eines Identifikationsmerkmals des zu schützenden Gegenstands aufweist. Bei der Aussparung kann es sich um ein Sichtfenster oder einen offenen Schlitz handeln. Somit können Identifikationsmerkmale, wie beispielsweise eine Ziffernfolge oder ein QR-Code et cetera durch den Schutzkörper hindurch erfasst werden.

Der Manipulationsschutz wird verbessert, wenn das erste und/oder das zweite Teil zumindest eine Sollbruchstelle aufweisen. Dabei kann die Sollbruchstelle von außen nicht sichtbar sein, insbesondere wenn das erste und das zweite Teil miteinander verbunden sind. Die Sollbruchstelle kann dazu führen, dass bei einem Manipulationsversuch das erste und/oder das zweite Teil beschädigt wird und somit erkannt werden kann, dass ein Manipulationsversuch stattgefunden hat.

Die Sollbruchstellen können beispielsweise als umlaufende Kerben oder Nuten an einer Innenwand des ersten Teils oder einer Außenwand des zweiten Teils ausgebildet sein.

Das erste und/oder das zweite Teil können grundsätzlich aus Metall oder Keramik oder dergleichen ausgebildet sein. Besondere Vorteile ergeben sich jedoch, wenn das erste und/oder das zweite Teil aus Kunststoff, insbesondere einem Thermoplast oder Duroplast, ausgebildet sind. Somit können das erste und/oder das zweite Teil besonders einfach in einem Spritzgießverfahren hergestellt werden.

Zudem kann es vorteilhaft sein, wenn der Kunststoff strahlenvernetzt ist. Dadurch kann eine Verformung bei Einwirkung höherer Temperaturen verhindert oder zumindest erschwert werden.

Weiterhin ist es vorteilhaft, wenn der Kunststoff elektromagnetisch abschirmende Füllstoffe aufweist. Somit kann der zu schützende Gegenstand elektromagnetisch abgeschirmt und auch dadurch vor Manipulation geschützt werden.

Zudem kann der Kunststoff flammhemmende Zusätze enthalten, um das Aufschmelzen beziehungsweise Brennen der Schutzvorrichtung zu erschweren.

Die Schutzvorrichtung kann nach der Montage von einer Person ohne besondere Kraftanstrengung drehbar gegenüber dem zu schützenden Gegenstand sein. Diese Drehbarkeit kann erreicht werden durch Spiel zwischen den zylindrischen Formelementen des zu schützenden Gegenstands beziehungsweise einem größeren Maß des Innendurchmessers des ersten Teils gegenüber dem Eckenmaß des/der prismatischen Formelemente des zu schützenden Gegenstands. Durch diese Drehbarkeit wird verhindert, dass ein am Außendurchmesser des ersten Teils angreifendes Drehmoment und/oder eine Kraft auf den zu schützenden Gegenstand übertragen werden.

Das erste und/oder das zweite Teil kann eine Signalübertragungseinrichtung, insbesondere eine Sendeeinrichtung, z. B. einen Transponder oder einen RFID-Chip, aufweisen. Dadurch kann die Schutzvorrichtung identifiziert werden. Alternativ oder zusätzlich kann eine Signalübertragung stattfinden, wenn Manipulationsversuche oder Manipulationen am zu schützenden Gegenstand erkannt werden. Manipulationsversuche können z. B. erkannt werden, wenn Schleifen in die Schutzvorrichtung eingebracht, z. B. eingegossen werden und diese verletzt werden.

Das erste Teil kann an seinem einen Ende einen nach innen vorstehenden Bund aufweisen. Der nach innen vorstehende Bund kann dabei direkt an dem ersten Teil angeformt sein. Der Bund kann vollständig umlaufend ausgebildet sein oder es können mehrere radiale nach innen vorstehende Abschnitte vorgesehen sein, die den Bund bilden. Der Bund kann also unterbrochen sein. Der Bund kann dabei insbesondere einen Stecker einer Sensoranordnung übergreifen, sodass die Sensoranordnung nicht von dem zu schützenden Gegenstand gelöst werden kann. Wenn an dem zu schützenden Gegenstand Ösen für eine drahtgebundene Plombe vorgesehen sind, kann der Bund die Ösen oberseitig übergreifen, damit die Verdrehbarkeit der Manipulationsschutzvorrichtung erhalten bleibt.

Es kann erwünscht sein, die Manipulationsschutzvorrichtung von Zeit zu Zeit auszutauschen. Das Entfernen ist durch Zerstörung der Manipulationsschutzvorrichtung möglich. Damit die Montage einer neuen Manipulationsschutzvorrichtung möglich ist, ohne den Impulsgeber zu entfernen, kann vorgesehen sein, dass das zweite Teil geschlitzt ausgestaltet ist, insbesondere einen in Längsrichtung verlaufenden durchgängigen Schlitz aufweist, sodass das zweite Teil radial bzw. seitlich auf den Impulsgeber aufgesetzt werden kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert.

Es zeigen:
- Fig. 1: eine perspektivische Darstellung einer Manipulationsschutzvorrichtung und eines zu schützenden Gegenstands;
- Fig. 2: eine Längsschnittdarstellung des Gegenstands der Fig. 1;
- Fig. 3: eine perspektivische Darstellung eines Teils der Manipulationsschutzvorrichtung;
- Fig. 4: ein weiteres Teil der Manipulationsschutzvorrichtung in einer Schnittdarstellung;
- Fig. 5: eine Schnittdarstellung gemäß der Linie C-C der Fig. 2;
- Fig. 6: eine Schnittdarstellung durch eine zweite Ausführungsform einer Manipulationsschutzvorrichtung;
- Fig. 7: eine perspektivische Darstellung eines Teils der zweiten Manipulationsschutzvorrichtung;
- Fig. 8: eine Schnittdarstellung durch eine dritte Ausführungsform einer Manipulationsschutzvorrichtung;
- Fig. 9: ein Verbindungselement einer Formschlussverbindung der dritten Ausführungsform einer Manipulationsschutzvorrichtung;
- Fig. 10: eine Ausführungsform eines ersten Teils mit einem Bund;
- Fig. 11: eine Teilschnittdarstellung der Anordnung gemäß der Fig. 10.

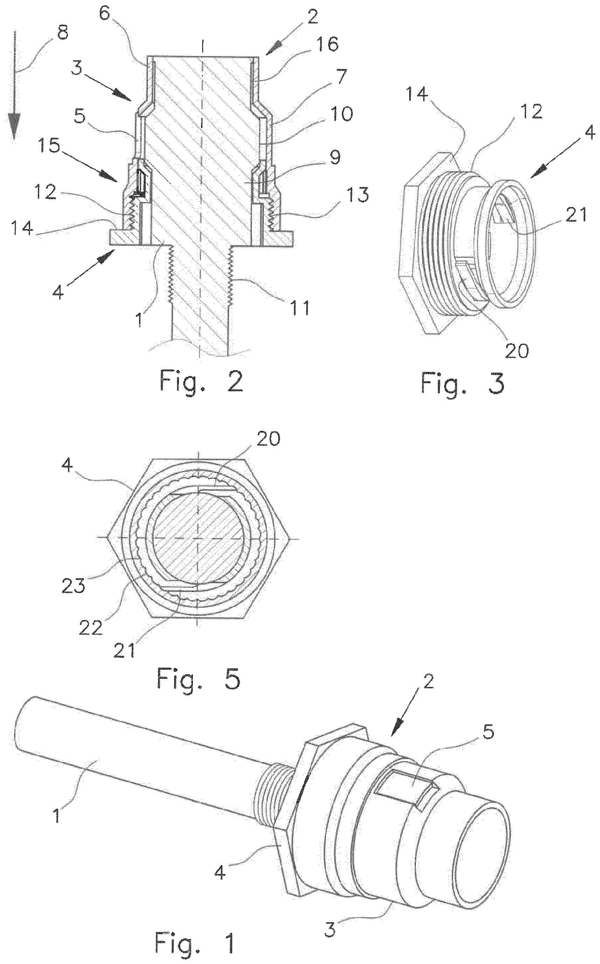

Die Fig. 1 zeigt einen zu schützenden Gegenstand 1, der teilweise in einer Aufnahme einer Manipulationsschutzvorrichtung 2 angeordnet ist. Die Manipulationsschutzvorrichtung 2 weist ein erstes Teil 3 und ein zweites Teil 4 auf. Hier ist zu sehen, dass das erste Teil 3 eine Aussparung 5 aufweist, durch die hindurch ein Identifikationsmerkmal des zu schützenden Gegenstands 1 sichtbar ist.

Die Manipulationsschutzvorrichtung 2 ist im Wesentlichen hohlzylindrisch ausgebildet. Zu erkennen ist, dass das erste Teil 3 stufenförmig ausgebildet ist. Insbesondere ist es an die Kontur des zu schützenden Gegenstands 1 angepasst.

Die Fig. 2 zeigt eine Längsschnittdarstellung der Anordnung gemäß der Fig. 1. Hier ist zu erkennen, dass das erste Teil 3 einen ersten zylindrischen Abschnitt 6 und einen zweiten zylindrischen Abschnitt 7 aufweist. Der zweite zylindrische Abschnitt 7 weist einen größeren Innendurchmesser auf als der erste zylindrische Abschnitt 6. Der zu schützende Gegenstand 1 weist im Bereich des zweiten zylindrischen Abschnitts 7 einen größeren Querschnitt auf als im Bereich des ersten zylindrischen Abschnitts 6. Die Innenkontur des ersten Teils 3 ist somit an die Außenkontur des zu schützenden Gegenstands 1 angepasst. Obwohl das Teil 3 mit Spiel auf dem zu schützenden Gegenstand 1 angeordnet ist, ist es aufgrund der unterschiedlichen Durchmesser des ersten und zweiten zylindrischen Abschnitts 6, 7 axial nicht weiter in Pfeilrichtung 8 bewegbar.

Das zweite Teil 4 weist einen zylindrischen Abschnitt 9 auf, dessen Innendurchmesser kleiner ist als der Innendurchmesser des zylindrischen Abschnitts 7. Insbesondere ist der Innendurchmesser des zylindrischen Abschnitts 9 auf den Durchmesser des zu schützenden Gegenstands 1 in diesem Bereich angepasst. Dies hat zur Folge, dass die Schutzvorrichtung 2 nicht entgegen der Pfeilrichtung 8 von dem zu schützenden Gegenstand 1 abgezogen werden kann. Die Schutzvorrichtung 2 ist somit axial relativ zu dem zu schützenden Gegenstand 1 festgelegt. Dadurch, dass die Schutzvorrichtung 2 jedoch mit Spiel auf dem zu schützenden Gegenstand 1 angeordnet ist, ist diese relativ zum zu schützenden Gegenstand 1 drehbar. Dies hat zur Folge, dass auf den prismatisch ausgebildeten Werkzeugangriff 10 des zu schützenden Gegenstands 1 keine Kraft ausgeübt werden kann und somit der zu schützende Gegenstand 1 nicht gedreht werden kann, insbesondere das Gewinde 11 nicht aus einem entsprechenden Gegengewinde herausgedreht werden kann.

Das zweite Teil 4 weist ein Außengewinde 12 und das erste Teil 3 weist ein Innengewinde 13 auf. Somit ist das zweite Teil 4 in das erste Teil 3 einschraubbar und zwar bis zu einem als Bund ausgebildeten Anschlag 14. In der gezeigten Stellung sind das erste und das zweite Teil 3, 4 durch eine Formschlussverbindung 15 unlösbar formschlüssig miteinander verbunden. Die Ausgestaltung der Formschlussverbindung 15 wird anhand der nachfolgenden Beschreibung näher erläutert. An der Schutzvorrichtung 2 sind hier nicht zu sehende Sollbruchstellen vorgesehen, die aufbrechen, wenn an der Schutzvorrichtung 2 ein Manipulationsversuch unternommen wird. Der zu schützende Gegenstand 1 ist teilweise in der Aufnahme 16 der Schutzvorrichtung 2 angeordnet.

Die Fig. 3 zeigt in perspektivischer Darstellung das zweite Teil 4. Hier ist zum einen das Außengewinde 12 zu erkennen. Außerdem sind zwei Formschlusselemente 20, 21 zu erkennen, die radial auslenkbar sind. Die Formschlusselemente 20, 21 wirken mit komplementären Formschlusselementen des ersten Teils 3 zusammen. Wenn das zweite Teil 4 in das erste Teil 3 eingeschraubt wird, so werden die Formschlusselemente 20, 21, die als Federstege ausgebildet sind, radial nach innen verdrängt. In entsprechenden Aussparungen beziehungsweise komplementären Formschlusselementen des ersten Teil 3 werden sie jedoch radial ausgelenkt und blockieren dadurch ein Zurückdrehen des zweiten Teils 4. Somit entsteht eine formschlüssige Verbindung, die von außen nicht mehr zugänglich ist. Dies führt dazu, dass das zweite Teil 4 und das erste Teil 3 unlösbar miteinander verbunden sind. Außerdem entsteht eine Verdrehsicherung in einer Drehrichtung.

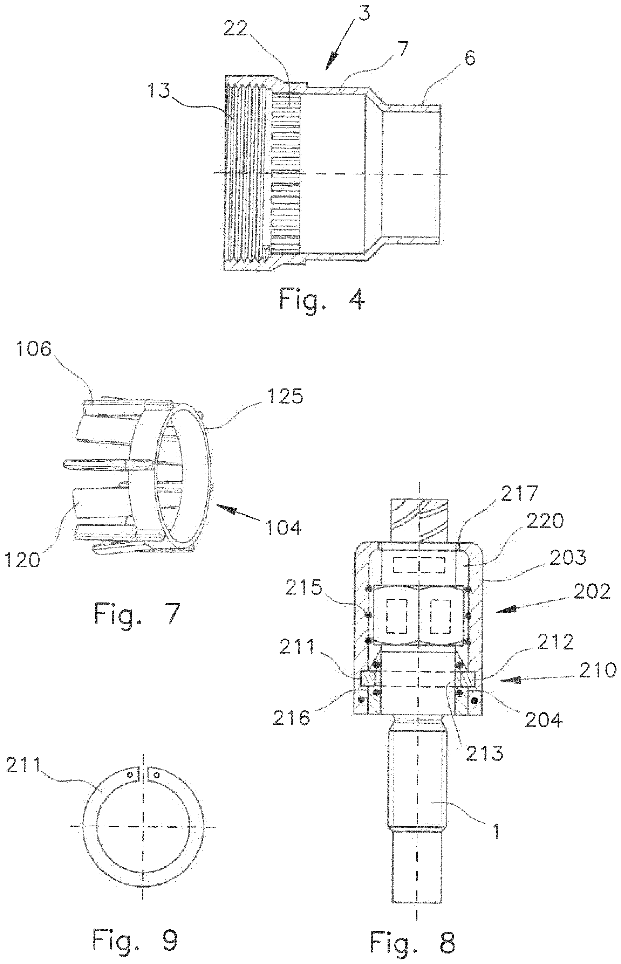

Die Fig. 4 zeigt eine Schnittdarstellung des ersten Teils 3. Hier ist zum einen das Innengewinde 13 zu erkennen, in dass das Außengewinde 12 eingeschraubt werden kann. An das Innengewinde 13 schließen sich als nutartige Aussparungen an der Innenseite des ersten Teils 3 ausgebildete Formschlusselemente 22 an. In diese Aussparungen können die freien Enden der Formschlusselemente 20, 21 eingreifen, wenn diese ausgelenkt werden. Somit wird ein Zurückdrehen des zweiten Teils 4 verhindert. Die nutartigen Aussparungen stellen somit komplementäre Formschlusselemente 22 zu den Formschlusselementen 20, 21 dar.

Die Fig. 5 zeigt eine Schnittdarstellung entsprechend der Linie C-C der Fig. 2. Hier ist zu erkennen, dass die ausgelenkten Formschlusselemente 20, 21 in die Formschlusselemente 22 eingreifen und somit ein Drehen des zweiten Teils 4 im Uhrzeigersinn verhindern. Bei einer Drehung des zweiten Teils 4 entgegen des Uhrzeigersinns werden die Formschlusselemente 20, 21 durch die Vorsprünge 23 verdrängt und somit radial ausgelenkt, sodass eine Drehung des zweiten Teils 4 entgegen des Uhrzeigersinns möglich ist.

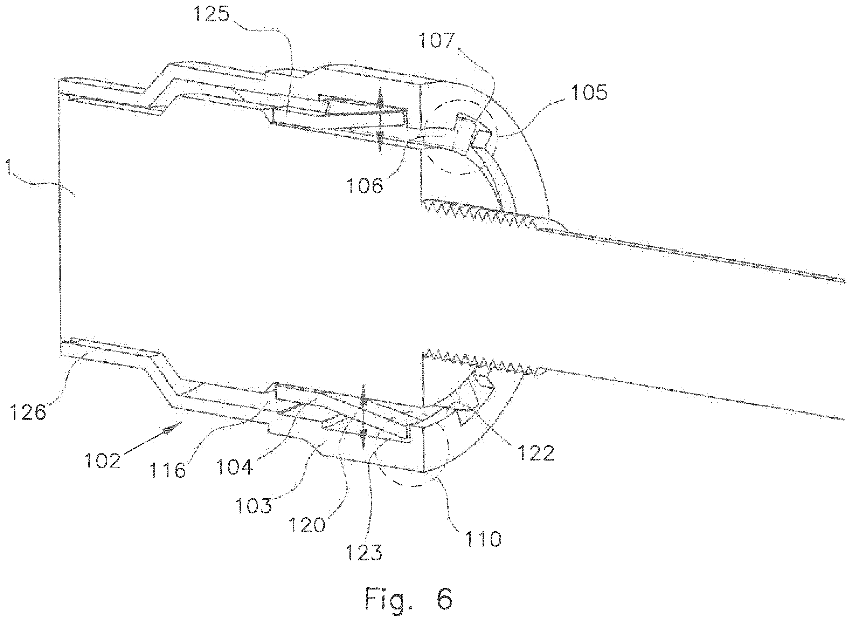

Die Fig. 6 zeigt eine Schnittdarstellung durch eine zweite Ausführungsform einer Manipulationsschutzvorrichtung 102 mit einem ersten Teil 103 und einem zweiten Teil 104. Auch die Teile 103, 104 sind im Wesentlichen hohlzylindrisch ausgebildet, sodass eine Aufnahme 116 für den zu schützenden Gegenstand 1 gebildet ist. Das zweite Teil 104 ist im Wesentlichen vollständig im ersten Teil 103 angeordnet. Es ist eine Verdrehsicherung 105 vorgesehen, wobei die Verdrehsicherung 105 den axial ausgerichteten Steg 106 des zweiten Teils 104 und eine Ausnehmung 107 des ersten Teils 103 umfasst. Der Steg 106 ist in der Ausnehmung 107 angeordnet, sodass eine Relativverdrehung von zweitem Teil 104 zu erstem Teil 103 nicht möglich ist.

Weiterhin ist eine Formschlussverbindung 110 zu erkennen, die durch ein als radial auslenkbarer Federsteg ausgebildetes Formschlusselement 120 und ein als Innenvorsprung oder Hintergriff ausgebildetes Formschlusselement 122 ausgebildet ist. Beim Einschieben des zweiten Teils 104 in axialer Richtung in das erste Teil 103 wird das Formschlusselement 120 durch das Formschlusselement 122 radial nach innen verdrängt. Sobald das Formschlusselement 120 vollständig im ersten Teil 103 angeordnet ist, schnappt es in eine Aussparung 123 und gelangt dadurch in Hintergriff zu dem Formschlusselement 122. Nun kann das zweite Teil 104 nicht mehr in axialer Richtung aus dem ersten Teil 103 herausgezogen werden. Das erste und das zweite Teil 103, 104 sind unlösbar miteinander verbunden und zwar durch die Formschlussverbindung 110.

Am anderen Ende weist das zweite Teil 104 einen ringförmigen Anschlag 125 auf, der verhindert, dass die gesamte Schutzvorrichtung 102 in axialer Richtung, d. h. nach links, von dem zu schützenden Gegenstand 1 abgezogen werden kann. Entsprechend verhindert der zylindrische Abschnitt 126, dass die Schutzvorrichtung 102 nach rechts von dem zu schützenden Gegenstand 1 abgezogen werden kann. Eine relative Drehbewegung von Schutzvorrichtung 102 und zu schützendem Gegenstand 1 ist jedoch möglich, da die Schutzvorrichtung 102 mit Spiel auf dem zu schützenden Gegenstand 1 angeordnet ist.

Die Fig. 7 zeigt eine perspektivische Darstellung des zweiten Teils 104. Die vorher bereits beschriebenen Elemente sind mit Bezugsziffern versehen.

Die Fig. 8 zeigt eine Schnittdarstellung durch eine dritte Ausführungsform einer Schutzvorrichtung 202. Diese weist ein erstes Teil 203 und ein darin angeordnetes zweites Teil 204 auf. Das erste und das zweite Teil 203, 204 sind jeweils hohlzylindrisch ausgebildet und bilden eine Aufnahme 220 für den zu schützenden Gegenstand. Das zweite Teil 204 ist durch eine Formschlussverbindung 210 mit dem ersten Teil 203 verbunden. Die Formschlussverbindung 210 umfasst ein Verbindungsteil 211, welches als Federring ausgebildet ist. Der Federring ist sowohl teilweise in einer Innennut 212 des ersten Teils 203 als auch einer Außenumfangsnut 213 des zweiten Teils 204 angeordnet. In der gezeigten Darstellung sind Sollbruchstellen 215, 216 angedeutet, die aufbrechen, wenn ein Manipulationsversuch unternommen wird.

Das erste Teil 203 weist im oberen Bereich einen Innendurchmesser - im vorliegenden Fall in Form eines Zentrierbunds 217 - auf, der so bemessen ist, dass die Schutzvorrichtung 202 nicht axial nach unten von dem zu schützenden Gegenstand 1 abgezogen werden kann. Andererseits weist das zweite Teil 204 eine geometrische Form auf, die verhindert, dass die Schutzvorrichtung 202 in der gezeigten Darstellung nach oben von dem zu schützenden Gegenstand 1 abgezogen werden kann. Die Schutzvorrichtung 202 ist jedoch so mit Spiel auf dem zu schützenden Gegenstand 1 angeordnet, dass eine relative Drehbewegung von Schutzvorrichtung 202 zum zu schützenden Gegenstand 1 möglich ist. Das Spiel ist vorzugsweise so gering, dass die Schutzvorrichtung 202 auf dem zu schützenden Gegenstand 1 nicht klappert.

Die Fig. 9 zeigt eine Draufsicht auf das Verbindungsteil 211.

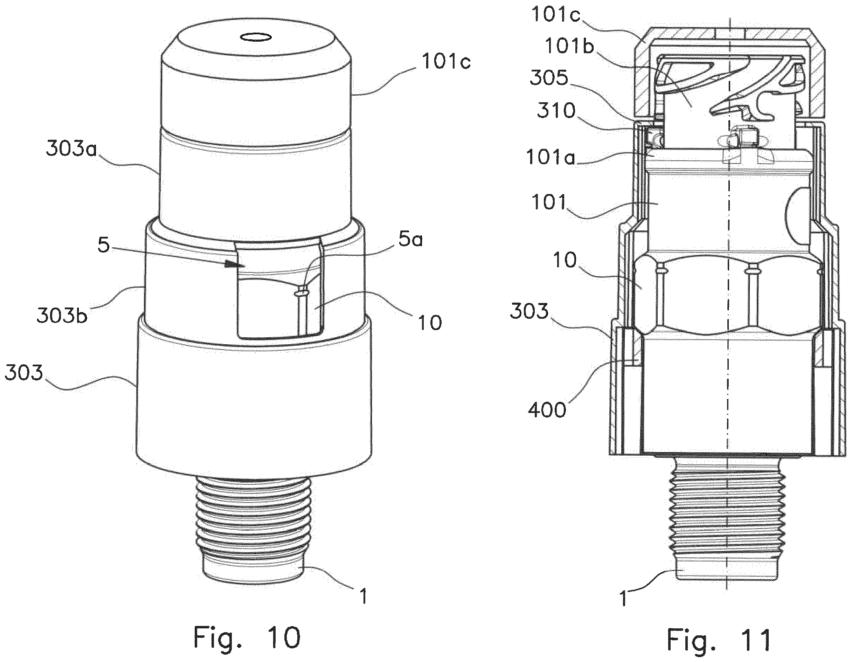

Der in Fig. 10 gezeigte als Impulsgeber ausgebildete zu schützende Gegenstand 1 weist ein zylindrisches Schutzgehäuse 101 (s. Fig. 11) für eine hier nicht näher dargestellte Sensoranordnung auf. Das Schutzgehäuse 101 ist mit einem Werkzeugangriff 10, hier einem Mehrkantabschnitt, insbesondere Sechskantabschnitt, versehen. Am Werkzeugangriff 10 kann ein Schlüssel angesetzt werden und dadurch das Schutzgehäuse 101 in ein hier nicht dargestelltes Getriebegehäuse eines Fahrzeugs eingeschraubt werden. Am oberen Ende 101a des Schutzgehäuses 101 ragt eine Steckeranordnung 101b aus dem Schutzgehäuse 101 heraus, die durch eine abnehmbare Schutzkappe 101c abgedeckt ist.

In Fig. 10 ist das erste Teil 303 einer Manipulationsschutzvorrichtung gezeigt. Der obere Abschnitt der ersten Teile 3, 103, 203 kann entsprechend dem ersten Teil 303 ausgestaltet sein bzw. das erste Teil 303 kann so ausgestaltet werden, dass es mit jedem der zweiten Teile 4, 104, 204 kombiniert werden könnte. Das erste Teil 303 weist mehrere zylindrische Abschnitte auf. Insgesamt verjüngt sich das erste Teil 303 zu seinem oberen Ende hin. Im Bereich 303a weist das erste Teil 303 einen Durchmesser auf, der kleiner ist als der Minimaldurchmesser des Werkzeugangriffs 10. Dadurch kann verhindert werden, dass sich das erste Teil 303 axial entgegen der Pfeilrichtung 306 auf dem Schutzgehäuse 101 verschiebt.

Im Bereich 303b weist das erste Teil 303, das ansonsten umfangsmäßig geschlossen ist, also eine durchgängige Mantelfläche aufweist, eine Aussparung 5 auf, durch die hindurch ein Identifikationsmerkmal 5a des Gegenstands 1 zu erfassen ist.

Die teilweise geschnittene Ansicht in Fig. 11 verdeutlicht, dass am oberen Ende des ersten Teils 303 ein nach innen vorstehender Bund 305 vorgesehen ist, der nach dem Aufsetzen des ersten Teils 303 auf den Gegenstand 1 Ösen 310 an der Steckeranordnung 101b übergreift. Insgesamt sind drei solcher Ösen 310 vorgesehen, die für eine drahtgebundene Verplombung genutzt werden könnten. Der Bund 305 überdeckt die Ösen 310, sodass es unmöglich ist, die Steckeranordnung 101b mit der Sensoranordnung aus dem Schutzgehäuse 101 zu entfernen.

Denkbar ist es auch, dass der Bund 305 nicht durchgängig ausgebildet ist, sondern einzelne radiale Vorsprünge den Bund bilden.

An der inneren Mantelfläche des ersten Teils können Kerben, insbesondere sich in Längsrichtung erstreckende Kerben, vorgesehen sein, die Sollbruchstellen darstellen. Die Kerben bewirken, dass bei Kraftangriff das erste Teil 303 zerstört wird.

Die Bezugsziffer 400 bezeichnet einen Abschnitt eines hier nur angedeuteten zweiten Teils.

## Patentansprüche

1. System aus einer Manipulationsschutzvorrichtung (2, 102, 202) und eines vor Manipulation zu schützenden Gegenstands (1), die Manipulationsschutzvorrichtung umfassend: eine Aufnahme (16, 116, 220) zur zumindest teilweisen Aufnahme eines vor Manipulation zu schützenden Gegenstands (1), wobei die Manipulationsschutzvorrichtung (2, 102, 202) ein erstes Teil (3, 103, 203, 303) und ein zweites Teil (4, 104, 204) aufweist, wobei das erste und das zweite Teil (3, 4, 103, 104, 203, 204, 303) mittels einer Formschlussverbindung (15, 110, 210) zumindest dann unlösbar verbunden sind, wenn der zu schützende Gegenstand (1) in der Aufnahme (16, 116, 220) angeordnet ist, wobei das erste und zweite Teil (3, 103, 203, 303, 4, 104, 204) Hohlzylinder sind und dass die Aufnahme (16, 116, 220) der Schutzvorrichtung (2, 102, 202) so bemessen ist, dass die Schutzvorrichtung (2, 102, 202) mit Spiel an dem zu schützenden Gegenstand (1) angeordnet ist, nämlich relativ zu dem zu schützenden Gegenstand (1) drehbar ist, und wobei die unlösbare Verbindung eine Verbindung ist, die nur gelöst werden kann, wenn die Formschlussverbindung zerstört wird.

2. System nach Anspruch 1, **dadurch gekennzeichnet, dass** das zweite Teil (4, 104, 204) zumindest abschnittsweise in dem ersten Teil (3, 103, 203, 303) angeordnet ist.

3. System nach einem der vorhergehenden Ansprüche, **dadurch gekennzeichnet, dass** das erste Teil (3, 103, 303) zumindest ein Formschlusselement (22, 122) und das zweite Teil (4, 104) zumindest ein komplementäres Formschlusselement (20, 21, 120) aufweisen.

4. System nach einem der vorhergehenden Ansprüche, **dadurch gekennzeichnet, dass** eine Verdrehsicherung (105) vorgesehen ist, die eine drehende Relativbewegung von erstem und zweitem Teil (3, 4, 103, 104, 303) zumindest in einer Drehrichtung verhindert.

5. System nach einem der vorhergehenden Ansprüche, **dadurch gekennzeichnet, dass** das erste und das zweite Teil (3, 4, 103, 104, 203, 204, 303) zur Montage axial relativ zueinander bewegbar sind und in Formschlussverbindung axial nicht relativ zueinander bewegbar sind.

6. System nach einem der vorhergehenden Ansprüche, **dadurch gekennzeichnet, dass** das erste und/oder das zweite Teil (3, 4, 103, 104, 203, 204, 303) ein eindeutiges Identifikationsmerkmal aufweist.

7. System nach einem der vorhergehenden Ansprüche, **dadurch gekennzeichnet, dass** die Schutzvorrichtung (2, 102, 202) zumindest eine Aussparung (5) für das Erkennen eines Identifikationsmerkmals des zu schützenden Gegenstands (1) aufweist.

8. System nach einem der vorhergehenden Ansprüche, **dadurch gekennzeichnet, dass** das erste und/oder das zweite Teil (3, 4, 103, 104, 203, 204, 303) zumindest eine Sollbruchstelle (215, 216) aufweist.

9. System nach einem der vorhergehenden Ansprüche, **dadurch gekennzeichnet, dass** der das erste und/oder das zweite Teil (3, 4, 103, 104, 203, 204, 303) aus Kunststoff ausgebildet ist.

10. System nach einem der vorhergehenden Ansprüche, **dadurch gekennzeichnet, dass** das erste und/oder zweite Teil (3, 4, 103, 104, 203, 204, 303) eine Signalübertragungseinrichtung, insbesondere eine Sendeeinrichtung, aufweist.

11. System nach einem der vorhergehenden Ansprüche, **dadurch gekennzeichnet, dass** das erste Teil (303) an seinem einen Ende einen nach innen vorstehenden Bund (305) aufweist.

## Claims

1. System with a tamper protection device (2, 102, 202) and an object (1) to be protected against tampering, wherein the tamper protection device has a receptacle (16, 116, 220) for at least partially receiving an object (1) to be protected against tampering, the anti-tampering device (2, 102, 202) having a first part (3, 103, 203, 303) and a second part (4, 104, 204), the first and second parts (3, 4, 103, 104, 203, 204, 303) being non-detachably connected by means of a positive-locking connection (15, 110, 210) at least when the object (1) to be protected has a first part (3, 103, 203, 303) and a second part (4, 104, 204) when the object (1) to be protected is arranged in the receptacle (16, 116, 220), the first and second parts (3, 103, 203, 303, 4, 104, 204) being hollow cylinders, and in that the receptacle (16, 116, 220) of the protective device (2, 102, 202) is dimensioned such that the protective device (2, 102, 202) can be mounted with play on the object (1) to be protected, 102, 202) is arranged with play on the object (1) to be protected, namely is rotatable relative to the object (1) to be protected, and wherein the non-detachable connection is a connection which can only be detached if the positive connection is destroyed.

2. System according to claim 1, **characterized in that** the second part (4, 104, 204) is arranged at least in sections in the first part (3, 103, 203, 303).

3. System according to one of the preceding claims, **characterized in that** the first part (3, 103, 303) has at least one positive-locking element (22, 122) and the second part (4, 104) has at least one complementary positive-locking element (20, 21, 120).

4. System according to one of the preceding claims, **characterized in that** an anti-rotation device (105) is provided, which prevents a relative rotational movement of the first and second parts (3, 4, 103, 104, 303) at least in one direction of rotation.

5. System according to one of the preceding claims, **characterized in that** the first and second parts (3, 4, 103, 104, 203, 204, 303) can be moved axially relative to one another for assembly and cannot be moved axially relative to one another in positive locking.

6. System according to one of the preceding claims, **characterized in that** the first and/or the second part (3, 4, 103, 104, 203, 204, 303) has a unique identification feature.

7. System according to one of the preceding claims, **characterized in that** the protective device (2, 102, 202) has at least one recess (5) for detecting an identification feature of the object (1) to be protected.

8. System according to one of the preceding claims, **characterized in that** the first and/or the second part (3, 4, 103, 104, 203, 204, 303) has at least one predetermined breaking point (215, 216).

9. System according to one of the preceding claims, **characterized in that** the first and/or the second part (3, 4, 103, 104, 203, 204, 303) is made of plastic.

10. System according to one of the preceding claims, **characterized in that** the first and/or second part (3, 4, 103, 104, 203, 204, 303) comprises a signal transmission device, in particular a transmitter device.

11. System according to one of the preceding claims, **characterized in that** the first part (303) has an inwardly projecting collar (305) at its one end.

## Revendications

1. Système constitué d'un dispositif de protection contre les manipulations (2, 102, 202) et d'un objet (1) à protéger contre les manipulations, le dispositif de protection contre les manipulations comprenant : un logement (16, 116, 220) permettant d'accueillir au moins partiellement un objet (1) à protéger contre les manipulations, dans lequel le dispositif de protection contre les manipulations (2, 102, 202) présente une première partie (3, 103, 203, 303) et une deuxième partie (4, 104, 204), dans lequel les première et deuxième parties (3, 4, 103, 104, 203, 204, 303) sont reliées de manière inamovible au moyen d'une liaison par complémentarité de forme (15, 110, 210) au moins lorsque l'objet à protéger (1) est agencé dans le logement (16, 116, 220), dans lequel les première et deuxième parties (3, 103, 203, 303, 4, 104, 204) sont des cylindres creux et le logement (16, 116, 220) du dispositif de protection (2, 102, 202) est dimensionné de sorte que le dispositif de protection (2, 102, 202) est agencé de manière à présenter un jeu au niveau de l'objet à protéger (1), c'est-à-dire qu'il peut tourner par rapport à l'objet à protéger (1), et dans lequel la liaison inamovible est une liaison qui ne peut être annulée que si la liaison par complémentarité de forme est détruite.

2. Système selon la revendication 1, **caractérisé en ce que** la deuxième partie (4, 104, 204) est agencée au moins par sections dans la première partie (3, 103, 203, 303).

3. Système selon l'une quelconque des revendications précédentes, **caractérisé en ce que** la première partie (3, 103, 303) présente au moins un élément de liaison par complémentarité de forme (22, 122) et la deuxième partie (4, 104) présente au moins un élément de liaison par complémentarité de forme (20, 21, 120) complémentaire.

4. Système selon l'une quelconque des revendications précédentes, **caractérisé en ce qu'**un dispositif anti-rotation (105) est prévu, qui empêche un déplacement relatif rotatif des première et deuxième parties (3, 4, 103, 104, 303) au moins dans un sens de rotation.

5. Système selon l'une quelconque des revendications précédentes, **caractérisé en ce que** les première et deuxième parties (3, 4, 103, 104, 203, 204, 303) peuvent être déplacées axialement l'une par rapport à l'autre en vue du montage et ne peuvent pas être déplacées axialement l'une par rapport à l'autre lorsqu'elles sont reliées par complémentarité de forme.

6. Système selon l'une quelconque des revendications précédentes, **caractérisé en ce que** la première et/ou la deuxième partie (3, 4, 103, 104, 203, 204, 303) présente(nt) une caractéristique d'identification unique.

7. Système selon l'une quelconque des revendications précédentes, **caractérisé en ce que** le dispositif de protection (2, 102, 202) comprend au moins un évidement (5) destiné à la reconnaissance d'une caractéristique d'identification de l'objet à protéger (1).

8. Système selon l'une quelconque des revendications précédentes, **caractérisé en ce que** la première et/ou la deuxième partie (3, 4, 103, 104, 203, 204, 303) présente(nt) au moins un point de rupture intentionnellement prévu (215, 216).

9. Système selon l'une quelconque des revendications précédentes, **caractérisé en ce que** la première et/ou la deuxième partie (3, 4, 103, 104, 203, 204, 303) est/sont réalisée(s) en matière plastique.

10. Système selon l'une quelconque des revendications précédentes, **caractérisé en ce que** la première et/ou la deuxième partie (3, 4, 103, 104, 203, 204, 303) présente(nt) un dispositif de transmission de signal, en particulier un dispositif d'émission.

11. Système selon l'une quelconque des revendications précédentes, **caractérisé en ce que** la première partie (303) présente au niveau d'une de ses extrémités une collerette (305) faisant saillie vers l'intérieur.
